(19) Europäisches Patentamt
European Patent Office
Office européen des brevets

(11) **EP 1 337 810 B1**

(12) **EUROPÄISCHE PATENTSCHRIFT**

(45) Veröffentlichungstag und Bekanntmachung des Hinweises auf die Patenterteilung:
**10.01.2007 Patentblatt 2007/02**

(21) Anmeldenummer: **01998794.0**

(22) Anmeldetag: **19.11.2001**

(51) Int Cl.:
**G01F 1/66** (2006.01)

(86) Internationale Anmeldenummer:
**PCT/DE2001/004343**

(87) Internationale Veröffentlichungsnummer:
**WO 2002/044662 (06.06.2002 Gazette 2002/23)**

(54) **DURCHFLUSSMESSER**

FLOW METER

DEBITMETRE PAR ULTRASONS

(84) Benannte Vertragsstaaten:
**AT BE CH CY DE DK ES FI FR GB GR IE IT LI LU MC NL PT SE TR**

(30) Priorität: **30.11.2000 DE 10059565**

(43) Veröffentlichungstag der Anmeldung:
**27.08.2003 Patentblatt 2003/35**

(73) Patentinhaber: **Landis+Gyr GmbH**
**90495 Nürnberg (DE)**

(72) Erfinder: **MÜLLER-GRIMM, Wolfgang**
**91074 Herzogenaurach (DE)**

(74) Vertreter: **Bauerschmidt, Peter et al**
**Rau, Schneck & Hübner**
**Patentanwälte**
**Königstrasse 2**
**90402 Nürnberg (DE)**

(56) Entgegenhaltungen:
**DE-A- 19 808 701     DE-U- 29 719 677**
**DE-U- 29 719 730     US-A- 4 103 551**
**US-A- 4 519 260**

## Beschreibung

Die Erfindung betrifft einen Durchflussmesser mittels Ultraschall nach dem Oberbegriff des Anspruchs 1.

Solche Durchflussmesser sind in einem von einem Medium erfüllten Rohrsystem eingebaut und messen mit Hilfe von Ultraschallwellen die Strömungsgeschwindigkeit des flüssigen oder gasförmigen Mediums. Diese Durchflussmesser dienen zur Erfassung von bezogenen Mengen des Mediums, ohne dass dem Medium bewegliche Teile eines Messsystems ausgesetzt sind.

Aus dem deutschen Gebrauchsmuster DE G 89 00 110.9 sind verschiedene Ausführungen eines in ein Rohrsystem einzubauenden Messrohrs mit Anordnungen von Ultraschall erzeugenden und empfangenden Wandlern gezeigt. Die Wandler sind oft rotationssymmetrisch aufgebaut und strahlen Bündel von Ultraschallwellen in Richtung einer Sendeachse ab.

Ausführungen des Durchflussmessers mit einer axialen Durchschallung, bei denen sich der Ultraschall parallel zur Messrohrachse fortpflanzt, weisen wegen der Umleitung der Strömung um die Wandlergehäuse herum einen vergleichsweise hohen Strömungswiderstand auf. Ausserdem ist das Innere des Messrohrs erst nach einer vollständigen Zerlegung des Geräts zu reinigen. In einem vorgegebenen Messrohr und bei konstantem Durchfluss ändert sich die Strömungsgeschwindigkeit über den Querschnitt, wobei an der Innenfläche des Messrohrs die Geschwindigkeit null ist. Das Maximum der Strömung befindet sich irgendwo auf der Querschnittsfläche. Eine ungestörte Strömung ist rotationssymmetrisch mit dem Maximum auf der Messrohrachse.

Strömungsprofile verändern sich mit dem Durchfluss und hängen von der Viskosität des Mediums, der Auslegung des Rohrsystems und der Beschaffenheit der Innenwand des Messrohrs ab. Die Geräte mit einer axialen Durchschallung können daher einen vom Strömungsprofil im Messrohr abhängigen Fehler aufweisen. Bauliche Massnahmen können gemäss der EP 0 565 851 B1 diesen Messfehler minimieren.

Bei den Ausführungen des Messrohrs mit einer Anordnung der Wandler ausserhalb des Strömungsquerschnitts, z.B. in Ausbuchtungen des Messrohrs, ist die Messstrecke im Messrohr schräg durchschallt, damit der Ultraschall durch das ganze Strömungsprofil beeinflusst wird. Die Sendeachsen der Wandler liegen in einer die Messrohrachse enthaltenden Längsschnittebene. Das Medium strömt auf seinem Weg durch das Messrohr, ohne auf Umlenkungen oder andere Hindernisse zu stossen. Dieser Vorteil ist nur mit kleineren Messwerten zu erkaufen, da lediglich die Komponente der Ultraschallwellen parallel zur Messrohrachse die Strömungsgeschwindigkeit erfasst. Der empfangende Wandler ist auf der dem sendenden Wandler gegenüberliegenden Wand des Messrohrs angeordnet.

Für eine genauere Erfassung eines kleinen Durchflusses mit niederen Strömungsgeschwindigkeiten ist die Messstrecke im Messrohr zu verlängern. Dies ist bei einem vorgegebenen Querschnitt des Messrohrs nur durch eine mehrfache Spiegelung der Ultraschallwellen an der Innenseite des Messrohrs möglich; beispielsweise ist der Weg der Ultraschallwellen durch das Messrohr in "V"- oder "W"- Form gefaltet. Der Nachteil eines wegen Reflexionen verminderten Empfangssignals wird durch die genauere Erfassung des Strömungsprofils, einen niederen Strömungswiderstand, eine geringere Anfälligkeit für eine Verschmutzung des Messrohres durch aus dem Medium abgelagerte Partikel aufgewogen.

Bei dem aus der DE 43 36 370 C1 bekannten Durchflussmesser wird die Erfassung des Strömungsprofils weiter verbessert. Die Ultraschallwellen werden vom sendenden Wandler senkrecht zur Messrohrachse eingestrahlt bzw. zum Empfänger geleitet, wobei die Sendeachsen der Wandler mit der Messrohrachse in einer Ebene liegen. Zwei schräg zur Strömung gestellte Spiegelflächen sind auf der den Wandlern gegenüberliegenden Innenwand des Messrohrs angeordnet und lenken die Ultraschallwellen schief zur Messrohrachse ab. Die Richtung der Ultraschallwellen weist nach der ersten Spiegelung zwei orthogonale Komponenten senkrecht zur Messrohrachse und eine Komponente parallel zur Messrohrachse auf. Die Ultraschallwellen werden daher mehrfach an der Innenwand so reflektiert, dass der Weg der Ultraschallwellen im Messrohr einen spiralförmigen Polygonzug bildet.

Die zweite Spiegelfläche am Ende des spiralförmigen Polygonzugs lenkt die ankommenden Ultraschallwellen in Richtung der Sendeachse des zweiten, als Empfänger dienenden Wandlers ab. Der Vorteil der genaueren Erfassung der Strömung wird durch Verteuerung des Messrohres durch Einformen von Stützwülsten für die beiden Spiegelflächen auf der Innenwand, durch eine zusätzliche Beeinträchtigung des Strömungsprofils und eine damit verbundene Anfälligkeit für Ablagerungen von Fremdpartikeln erkauft.

Ein Durchflussmesser entsprechend dem Oberbegriff des Anspruchs 1 ist in der US 4 103 551 beschrieben. Offenbart wird ein Durchflussmesser mit einem von einem flüssigen Medium durchströmten geraden Messrohr, mit einem Ultraschallwellen sendenden sowie einem aus dem Medium Ultraschallwellen empfangenden Ultraschallwandler, die beide in das Medium eintauchen, wobei sich die Ultraschallwellen entlang einer Sendeachse der Ultraschallwandler ausbreiten, wobei die Sendeachsen der Ultraschallwandler nicht in einer gemeinsamen Ebene angeordnet sind und wobei ein Weg der Ultraschallwellen von dem einen Ultraschallwandler zum anderen Ultraschallwandler zwei Reflexionsstellen an einer Innenwand des Messrohres aufweist.

Der Erfindung liegt die Aufgabe zu Grunde, einen kostengünstigen Durchflussmesser zu schaffen, der Strömungsgeschwindigkeiten bei hoher Genauigkeit erfasst und weniger auf eine Verschmutzung anfällig ist sowie eine einfache Befestigung der Ultraschallwandler auf dem Messrohr ermöglicht.

Die Aufgabe wird erfindungsgemäß durch den Durchflussmesser gemäß dem Anspruch 1 gelöst. Vorteilhafte Weiterbildungen der Erfindung ergeben sich aus den abhängigen Ansprüchen.

Ausführungsbeispiele, weitere Vorteile und Details der Erfindung werden nachfolgend anhand der Zeichnung näher erläutert. Es zeigen

FIG 1 ein Messrohr im Längsschnitt,
FIG 2 das Messrohr im Querschnitt,
FIG 3 eine zweite Ausführung des Messrohrs im Querschnitt,
FIG 4 das Messrohr im Längsschnitt,
FIG 5 eine weitere Ausführung des Messrohrs im Querschnitt,
FIG 6 eine Anordnung eines Ultraschallwandlers am Messrohr,
FIG 7 ein Schallweg im Messrohr,
FIG 8 eine Fokussiereinrichtung für Ultraschallwellen im Schnitt und
FIG 9 und 10 Prinzipdarstellungen eines Durchflussmessers.

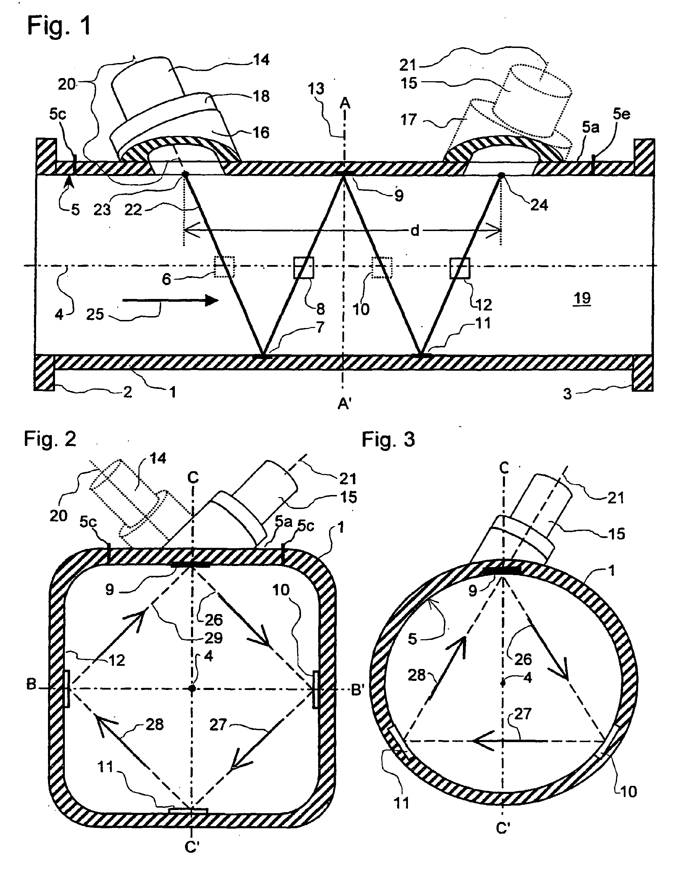

In der FIG 1 bedeuten 1 ein Messrohr, 2 und 3 Rohrflanschen für den Einbau des Messrohrs 1 in ein hier nicht gezeigtes Rohrsystem, 4 eine Messrohrachse, 5 eine Innenwand des Messrohrs 1, 6 bis 12 sind Spiegelflächen, die Ultraschallwellen umlenken, und 13 eine Ebene für einen Querschnitt A-A', wobei die Messrohrachse 4 ein Lot zur Ebene 13 ist. 14 und 15 bezeichnen Ultraschallwandler oder kurz Wandler 16 und 17 sind Adapter oder Übergangsstücke für den Anschluss der Wandler 14 bzw. 15 an das Messrohr 1.

Der Wandler 14 bzw. 15 ist mit einem Wandlerflansch 18 am Übergangsstück 16 bzw. 17 so befestigt, dass ein im Innern des Messrohrs 1 strömendes Medium 19 nicht ins Freie austreten kann. In einer anderen Ausführung ist das Übergangsstück 16, 17 Teil des Gehäuses der Wandler 14, 15. Als Medium 19 sind Flüssigkeiten oder Gase, wie z.B. heisses oder kaltes Wasser, Benzin, Öl, oder Methan, Erd- oder Stadtgas usw., zu nennen. Alternativ können die Wandler 16,17 mit oder ohne Adapter auf einer Platte 5a befestigt, insbesondere geschraubt, sein, welche eine Wand des Messrohres 1 bildet. Die Platte 5a ist in den FIG 1 und 2 durch die Linie 5c begrenzt. Somit sind die Wandler 16,17 auf einfache Weise gemeinsam vom Messrohr 1 - auch wenn dieses eingebaut ist - abbaubar. Bevorzugt ist die Ausführung mit Platte 5a bei Dimensionen ab Normgröße DN50.

Die Zeichnung der FIG 1 zeigt das aufgeschnittene Messrohr 1, wobei die Längsschnittebene mit der Zeichnungsebene zusammenfällt. Die Spiegelflächen 6 und 10, der zweite Wandler 15 und Teile des Übergangsstücks 17 sind über der Längsschnittebene angeordnet und sind daher weggeschnitten; sie werden zum besseren Verständnis mit punktierten Linien dargestellt.

Die Schwerpunkte der Spiegelflächen 6, 8, 10 und 12 sind auf Schnittlinien einer die Messrohrachse 4 enthaltenden Azimutebene B-B' (FIG 2) angeordnet, die auf der Längsschnittebene C-C' (FIG 2) senkrecht steht. Die erste und die fünfte Spiegelfläche 6, 10 sind im weggeschnittenen Teil des Messrohres 1 angeordnet und die dritte und siebte Spiegelfläche 8, 12 sind auf der Innenwand 5 sichtbar. Die Schwerpunkte der zweiten, vierten und siebten Spiegelfläche 7, 9 und 11 liegen auf den Schnittlinien der Innenwand 5 mit der Längsschnittebene C-C'; die Spiegelflächen 7, 9 und 11 sind im Schnitt dargestellt.

Die Wandler 14, 15 weisen beispielsweise ein rotationssymmetrisches topfförmiges Gehäuse auf und senden bzw. empfangen Ultraschallwellen längs einer Sendeachse 20, 21. Das Übergangsstück 16, 17 richtet die Sendeachse 20, 21 so aus, dass der Ultraschall längs eines Wegs 22 auf den ersten Spiegel 6 auftrifft. Die Neigung der Sendeachsen 20, 21 bewirkt, dass die Längsschnittebene C-C' beispielsweise nur die Übergangsstücke 16, 17 schneidet.

Die Sendeachse 20 des ersten Wandlers 14 durchstösst in einem Anfangspunkt 23, von unterhalb kommend, die Längsschnittebene C-C' in der Verlängerung der Innenwand 5 und steigt oberhalb der Längsschnittebene C-C' bis zur ersten Spiegelfläche 6 auf. Ein Durchstosspunkt der Sendeachse 20 bzw. 21 mit einer Innenwand 5 des Messrohrs 1 legt den Schwerpunkt der dem Wandler 14 bzw. 15 am nächsten angeordneten Spiegelfläche 6 bzw. 12 und die Azimutebene B-B' fest.

Die vom ersten Wandler 14 aus gesandten Ultraschallwellen treffen auf die erste Spiegelfläche 6 auf und werden nach dem Reflexionsgesetz auf die zweite Spiegelfläche 7 geworfen. Nach der Reflexion an der zweiten Spiegelfläche 7 treffen die Ultraschallwellen auf die unterhalb der Längsschnittebene C-C' gelegene dritte Spiegelfläche 8 auf. Die dritte Spiegelfläche lenkt die Ultraschallwellen zur vierten Spiegelfläche 9 in der Höhe der Längsschnittebene C-C' ab, wobei der Weg 22 nunmehr parallel zur Sendeachse 21 des zweiten Wandlers 15 verläuft.

Nach der Reflexion auch an der vierten Spiegelfläche 9 ist die Richtung der Ultraschallwellen wieder parallel zur Sendeachse 20 des ersten Wandlers 14. Die Reflexionen wiederholen sich an den weiteren Spiegelflächen 10, 11 und 12, wobei die siebte und letzte Spiegelfläche 12 die Ultraschallwellen auf die Sendeachse 21 des zweiten Wandlers 15 ausrichtet. Die Ultraschallwellen durchstossen in einem Endpunkt 24 von unten kommend erneut die Längsschnittebene C-C' und treffen auf den zweiten Wandler 15 auf.

Der Weg 22 bildet im Messrohr 1 einen spiralförmigen Polygonzug mit zwei Umdrehungen um die Messrohrachse 4. Daher weist die Projektion des Wegs 22 auf die Längsschnittebene C-C' die Form eines Buchstabens "W" auf, wobei der Anfangspunkt 23 und der Endpunkt 24 die Endpunkte der Form "W" sind. Der Abstand d zwischen dem Anfangspunkt 23 und dem Endpunkt 24 ist die für die Erfassung des Durchflusses wirksame Länge des Messrohres 1.

Wenn der zweite Wandler 15 Ultraschallwellen aussendet, durcheilen die Ultraschallwellen den Weg 22 in umgekehrter Richtung, wobei sie zuerst auf die nächstgelegene Spiegelfläche 12 auftreffen und über die Spiegelflächen 11 bis 6 zum ersten Wandler 14 gelenkt werden, der dann die Ultraschallwellen empfängt. Da das Medium 19 in einer vorbestimmten Richtung 25 strömt, unterscheiden sich wegen des Mitführungseffektes durch das Medium 19 die Laufzeiten der Ultraschallwellen mit und entgegen der Strömungsrichtung 25. Dieser Laufzeitunterschied ist proportional zur mittleren Strömungsgeschwindigkeit und kann beispielsweise als Phasendifferenz in einer hier nicht gezeigten Auswerteinheit gemessen werden.

Im Gegensatz zum Stand der Technik liegen die Sendeachsen 20 und 21 nicht in der Längsschnittebene C-C'. Ausserhalb des Messrohrs 1 ist die Sendeachse 20 des ersten Wandlers 14 unterhalb der Längsschnittebene C-C', die Sendeachse des zweiten Wandlers 15 oberhalb der Längsschnittebene C-C'.

In einer anderen Ausführung des Messrohrs 1 ist der zweite Wandler 15 anstelle der vierten Spiegelfläche 9 angeordnet, wobei die Sendeachse 21 zum Schwerpunkt der dritten Spiegelfläche 8 hinweist. Der spiralförmige Polygonzug endet nach einer vollständigen Umdrehung von 360°. Die Projektion des Wegs 22 auf die Längsschnittebene C-C' weist die Form eines Buchstabens "V" auf. Der Endpunkt 24 befindet sich bei dieser Ausführung im Schwerpunkt der vierten Spiegelfläche 9. Der Abstand d zwischen dem Anfangspunkt 23 und dem Endpunkt 24 der Form "V" begrenzen die für die Messung der Geschwindigkeit der Strömung wirksame Länge des Messrohrs 1.

Bei weiteren Ausführungen des Messrohrs 1 ist der zweite Wandler 15 anstelle einer der zweiten Spiegelfläche 7 folgenden Spiegelflächen 8, 9, 10, 11, 12 angeordnet, z.B. anstelle der dritten Spiegelfläche 8, wobei die Sendeachse 21 des zweiten Wandlers 15 durch den Schwerpunkt der nächst gelegenen Spiegelfläche, hier Spiegelfläche 7, gerichtet ist. Allerdings wird bei diesen Ausführungen das Strömungsprofil nicht optimal erfasst. Im Minimum sind zwei Reflexionen der Ultraschallwellen notwendig, damit die Sendeachsen 20, 21 nicht in einer Ebene liegen.

Beispiele für Querschnitte A-A' sind in den FIG 2, 3 und 5 gezeigt, wobei die Ebene 13 (FIG 1) die Zeichnungsebene bildet. Die Ebene 13 schneidet senkrecht sowohl die Azimutebene B-B' als auch die Längsschnittebene C-C'. In der FIG 2 besteht das Messrohr 1 aus einem quadratischen Hohlprofil, wie es beispielsweise als gezogenes Metallprofil im Handel erhältlich ist. Die Ultraschallwellen werden an der Innenwand 5 mehrfach gespiegelt.

Für die Ultraschallwellen mit einer Frequenz von 1 MHz beträgt die Wellenlänge in Wasser rund 1,5 mm, so dass bei gezogenen Rohren die Beschaffenheit der Innenwand 5 selbst für Ultraschallwellen mit der Wellenlänge von 1,5 mm die Qualität eines Spiegels aufweist. Eine Nachbearbeitung der Innenwand 5 oder das Anbringen einzelner Spiegelflächen 6 bis 12 erübrigt sich. Von der Ebene 13 in Strömungsrichtung 25 (FIG 1) gesehen, werden die Ultraschallwellen an der Spiegelfläche 9 gespiegelt und auf einer Teilstrecke 26 parallel zur Senderichtung 20 des ersten, in der Zeichnung der FIG 2 weggeschnittenen Wandlers 14 auf die Spiegelfläche 10 gelenkt.

Die Ultraschallwellen eilen längs der im folgenden in der Reihenfolge der genannten Teilstrecken 27, 28 und 29, wobei die Spiegelflächen 11 und 12 die Ultraschallwellen jeweils ablenken, zum Endpunkt 24 (FIG 1) und erreichen in der Senderichtung 21 den zweiten Wandler 15. Nur die Spiegelfläche 9 ist im Schnitt gezeichnet; die andern Spiegelflächen 10, 11 und 12 sind nur symbolisch gezeichnet, da sie unterhalb der Ebene 13 liegen. Der auf die Ebene 13 projizierte Weg 22 (FIG 1) ist ein spiralförmiger Polygonzug und besteht aus vier Teilstrecken 26 bis 29 für eine vollständige Umdrehung von 360°.

Der spiralförmige Polygonzug windet sich um die Messrohrachse 4 und legt in Richtung parallel zur Messrohrachse 4 bei jeder Umdrehung von 360° die Hälfte des Abstands d (FIG 1) zurück, wenn der Weg 22 (FIG 1) in der Projektion auf die Längsschnittebene C-C' den Buchstaben "W" (FIG 1) bildet. Weist der Weg 22 jedoch einen "V"- Form auf, erreicht der Polygonzug bereits nach einer Umdrehung den zweiten Wandler 15.

Beim Messrohr 1 mit quadratischem Querschnitt fallen die Ultraschallwellen in der gezeigten Projektion unter einem Winkel von 45° auf die Spiegelflächen 6 (FIG 1) bis 12 ein, so dass die Ultraschallwellen bei jeder Spiegelfläche 6 (FIG 1) bis 12 um einen Winkel von 90° abgelenkt werden. Die beiden Sendeachsen 20 und 21 weisen in der Projektion daher ebenfalls einen Winkel von 90° auf.

Anstelle eines quadratischen Querschnitts sind auch rechtekkige Querschnitte für das Messrohr 1 verwendbar. Bei dieser Ausführung ist der Weg 22 auf den Spiegelflächen an den Schmalseiten des Messrohrs 1 um einen spitzen Winkel abgelenkt, auf den Spiegelflächen an den Breitseiten des Messrohrs 1 um einen stumpfen Winkel; entsprechend verändert sich auch der Winkel zwischen den beiden Sendeachsen 20 und 21. Die Teilstrecken 26 bis 29 bilden in der Projektion auf die Ebene 13 anstelle des Quadrats eine Rautenform.

In einer anderen Ausführung besitzt das Messrohr 1 einen kreisförmigen Querschnitt. Der Weg 22 durch das Messrohr 1 weist in der Projektion auf die Ebene 13 die in der FIG 2 gezeigte Form der Quadrats auf.

In der Ausführung der FIG 3 weist das Messrohr 1 den kreisförmigen Querschnitt A-A' (FIG 1) auf. Der als Beispiel gezeigte spiralförmige Polygonzug für den Weg 22 (FIG 1) weist in der Projektion auf die Ebene 13 (FIG 1) die Form eines gleichseitigen Dreiecks auf, wobei die drei geraden Teilstrecken 26, 27 und 28 unterhalb der Ebene 13 die Dreiecksseiten bilden. Die Ultraschallwellen werden an der Innenwand 5 reflektiert. Die Teilstrecke 26 verlässt die Spiegelfläche 9 parallel zur Richtung der Sendeachse 20 (FIG 2) des hier nicht gezeigten ersten Wandlers 14 (FIG 2). Der Weg 22 wird gemäss dem Reflexionsgesetz über die unterhalb der Ebene 13 liegenden Spiegelflächen 10 und 11 so umgelenkt, dass die Teilstrecke 28 parallel zur Sendeachse 21 auf den zweiten Wandler 15 hin führt.

Der spiralförmige Polygonzug besteht pro Umdrehung von 360° aus den drei Teilstrecken 26, 27 und 28. Bei nur einer Umdrehung liegen der Anfangspunkt 23 des Polygonzuges auf der Teilstrecke 26 und der Endpunkt 24 auf der Teilstrecke 28 in Richtung parallel zur Messrohrachse 4 im Abstand d (FIG 1) auseinander. Bei zwei Umdrehungen des spiralförmigen Polygonzuges zwischen dem Anfangspunkt 23 und dem Endpunkt 24 bilden zwei Gruppen aus den drei Teilstrecken 26, 27, 28 den Weg 22. Die Sendeachsen 20 (FIG 1) und 21 sind entsprechend auf zwei der Seiten des gleichseitigen Dreiecks ausgerichtet und schliessen in der Projektion auf die Ebene 13 den Winkel 60° ein.

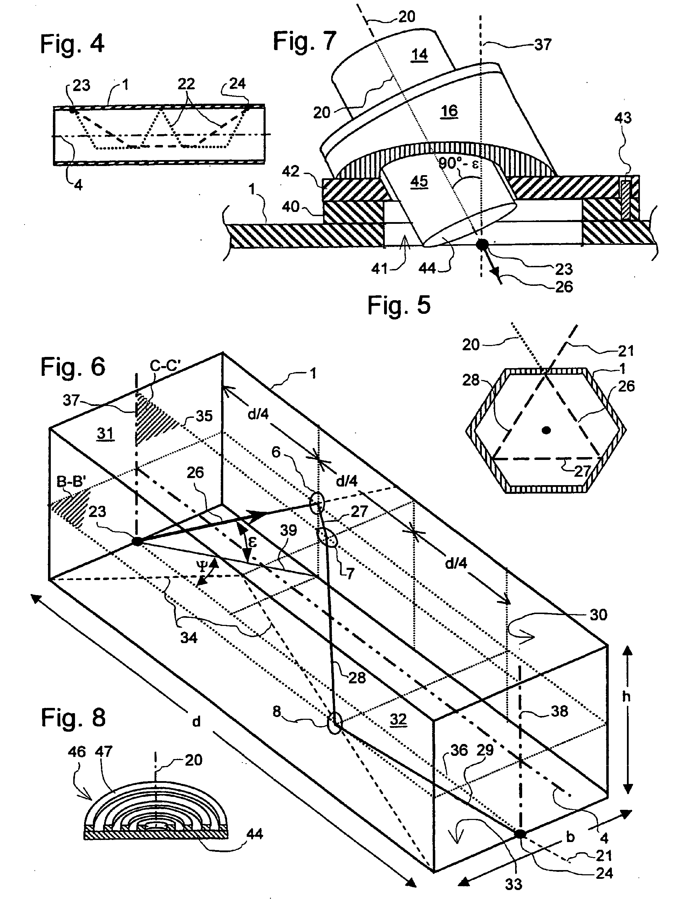

Die FIG 4 zeigt für das Messrohr 1 den spiralförmigen Polygonzug des Wegs 22 in der Projektion auf die Längsschnittebene C-C' (FIG 3), wenn der Polygonzug für eine Umdrehung von 360° aus drei Teilstrecken 26 (FIG 3), 27 (FIG 3) und 28 (FIG 3) besteht. In der Zeichnung der FIG 4 ist der Weg 22 mit nur einer Umdrehung des spiralförmigen Polygonzugs vom Anfangspunkt 23 bis zum Endpunkt 24 gestrichelt und der Weg 22 mit zwei Umdrehungen des spiralförmigen Polygonzugs punktiert dargestellt. Der Anfangspunkt 23 und der Endpunkt 24 sind parallel zur Messrohrachse 4 um den Abstand d voneinander entfernt. Der Weg 22 ist wenigstens zweimal an der Innenwand 5 (FIG 1) gespiegelt.

In einer weiteren Ausführung gemäss FIG 5 hat das Messrohr 1 den Querschnitt eines gleichseitigen Sechsecks. Jede zweite Seite des Messrohrs 1 weist den richtigen Winkel zu den einfallenden Ultraschallwellen auf, damit die Ultraschallwellen an der Innenwand 5 (FIG 3) in den spiralförmigen Polygonzug des Weges 22 (FIG 4) umgelenkt werden. In der Projektion auf die Ebene 13 (FIG 1) bildet der spiralförmige Polygonzug ein gleichseitiges Dreieck aus den Teilstrecken 26, 27 und 28 mit der Messrohrachse 4 als Schwerpunkt des gleichseitigen Dreiecks.

Auch anstelle der regelmässigen Rohrformen der FIG 3 und 5 sind Messrohre 1 mit einem in der Breite verzerrten Querschnitt verwendbar. In der Projektion auf die Ebene 13 bilden die drei Teilstrecken 26, 27, 28 anstelle des gleichseitigen Dreiecks ein gleichschenkeliges Dreieck mit der Basis parallel zur Azimutebene B-B'. Die Höhe des gleichschenkeligen Dreiecks über seiner Basis schneidet die Messrohrachse 4 und liegt in der Längsschnittebene C-C'.

Die Anzahl z der Reflexionen der Ultraschallwellen an der Innenwand 5 ist durch s, der Anzahl der Teilstrecken 26, 27, 28 und 29 (FIG 2) pro Umdrehung des spiralförmigen Polygonzugs, und n, der Anzahl der Umdrehungen des spiralförmigen Polygonzuges um die Messrohrachse 4, bestimmt, bis auf dem Weg 22 der Abstand d zwischen dem Anfangspunkt 23 (FIG 4) und dem Endpunkt 24 (FIG 4) zurückgelegt ist. Somit ist $z = s \cdot n - 1$, wobei s und n ganze Zahlen mit s grösser 1 und n grösser Null sind.

In der Zeichnung der FIG 6 ist der Weg 22 (FIG 1) in einem "transparenten" Messrohr 1 von rechteckigem Querschnitt dargestellt, um den aus den Teilstrecken 26 bis 29 zusammengesetzten, spiralförmigen Polygonzug des Wegs 22 in einer Ansicht zu zeigen. Die Bezugszahlen 30, 31, 32 und 33 bezeichnen vier Innenflächen der Innenwand 5 (FIG 1) des Messrohrs 1 in der Reihenfolge, in der sie die vom Anfangspunkt 23 kommenden Ultraschallwellen spiegeln.

Die Höhe h ist die Querabmessung der ersten und dritten Innenfläche 30 und 32 und die Breite b ist die Querabmessung der zweiten und vierten Innenfläche 31 und 33. Die Länge der Messstrecke entspricht dem Abstand d. Auf der zur Längsschnittebene C-C' parallele Innenfläche 32 bildet die Projektion des Wegs 22 die "V"- Form, die mittels gestrichelten Strecken 34 dargestellt ist.

In der Zeichnung der FIG 6 sind die hier nicht gezeigten Wandler 14 (FIG 1), 15 (FIG 1) auf der der vierten Innenfläche 33 zugehörigen, hier nicht dargestellten Aussenfläche des Messrohrs 1 angeordnet. Die punktierten Linien auf der ersten und dritten Innenfläche 30 bzw. 32 parallel zur Messrohrachse 4 sind die Schnittlinien mit der Azimutebene B-B'. Die zweite Innenseite 31 und die vierte Innenseite 33 sind mit zur Messrohrachse 4 parallelen, punktiert gezeichneten Mittellinien 35, 36 in Längsrichtung geteilt. Die Mittellinien 35, 36 sind die Schnittlinien der Längsschnittebene C-C' mit der zweiten und der vierten Innenfläche 31, 33.

Ein Lot auf die vierte Innenfläche am Ort des Anfangspunktes 23 bzw. Endpunktes 24 ist die Azimutachse 37 bzw. 38, um die die Projektion der Sendeachse 20 bzw. 21 auf die vierte Innenfläche um den Azimutwinkel Ψ gedreht ist.

Der erste Wandler 14 strahlt die Ultraschallwellen in der Senderichtung 20 ab. Die Ultraschallwellen gelangen durch den Anfangspunkt 23 hindurch in die Messstrecke und folgen dem Weg 22. Vom Anfangspunkt 23 weg steigt die Teilstrecke 26 unter einem Elevationswinkel ε bis zum Durchstosspunkt der Sendeachse 20 durch die erste Innenfläche 30, wobei der Durchstosspunkt der Schwerpunkt der ersten Spiegelfläche 6 ist. Mittels ersten Spiegelfläche 6 werden die Ultraschallwellen auf die zweite Teilstrecke 27 zur Spiegelfläche 7 auf der zweiten Innenwand 31 geschickt, von wo sie auf der dritten Teilstrecke 28 zur dritten Spiegelfläche 8 auf der dritten Innenwand 32 gelangen. Die dritte Spiegelfläche 8 lenkt die Ultraschallwellen in die vierte Teilstrecke 29, die sich nach dem Endpunkt 24 als Sendeachse 21 in den zweiten Wandler 15 fortsetzt.

Eine Komponente 39 der Teilstrecke 26 in der vierten Innenfläche 33 schliesst einen Azimutwinkel Ψ mit der Mittellinie 36 auf der vierten Innenfläche 33 ein.

Der Azimutwinkel Ψ berechnet sich gemäss

$$tg\ (\Psi) = \frac{snb}{2d}, \qquad\qquad [1]$$

wobei snb das Produkt der Breite b des Messrohrs 1 mit n, der Anzahl Umdrehungen des spiralförmigen Polygonzuges von je 360° um die Messrohrachse 4, und mit s, der Anzahl der Teilstrecken 26 bis 29 pro Umdrehung, ist. Im Nenner steht 2d für den doppelten Abstand d. Der Elevationswinkel ε ist bestimmt durch

$$tg\ (\varepsilon) = \frac{snh \bullet \cos(\Psi)}{2d}, \qquad\qquad [2]$$

wobei im Zähler b durch die Höhe h des Messrohrs 1 ersetzt und das Produkt snh mit cos (Ψ) multipliziert ist. Falls der spiralförmige Polygonzug pro Umdrehung aus drei Teilstrecken besteht, ist in den Gleichungen [1] und [2] für s = 3 gewählt, ist für b die Basis des entsprechenden Dreiecks, das aus den auf die Ebene 13 (FIG 1) projizierten Teilstrecken 26, 27 und 28 gebildet ist, und für h die Höhe dieses Dreiecks einzusetzen.

Jede der Teilstrecken 26 bis 29 ist gleich lang und hat in der Projektion auf die Längsschnittebene C-C' die Länge d/s. Der Weg 22 längs der Teilstrecken 26 bis 29, den die Ultraschallwellen zurücklegen, weist somit eine Länge L = d•[cos (Ψ)•cos (ε)]$^{-1}$ auf. Für den auf die Ultraschallwellen wirksame Mitführeffekt des strömenden Mediums 19 wirkt nur die Komponente des Wegs 22 parallel zur Strömungsrichtung 25, welche gleich dem Abstand d ist.

In der Tabelle 1 sind beispielhaft einige Werte für den Azimutwinkel Ψ und den Elevationswinkel ε angegeben, wobei das Messrohr 1 durch den Abstand d und der Höhe h in Einheiten der Breite b und der Weg 22 durch die Anzahl s und n in der oben genannten Bedeutung bestimmt sind.

Tabelle 1:

| s | n | Abstand d | Höhe h | Azimutwinkel Ψ | Elevationswinkel ε |
|---|---|---|---|---|---|
| 4 | 1 | 2b | b | 45° | 45° |
| 4 | 2 | 4b | b | 45° | 45° |
| 4 | 3 | 6b | b | 45° | 45° |
| 3 | 1 | 2b | b | 36.9° | 36.9° |
| 3 | 2 | 4b | b | 36.9° | 36.9° |
| 3 | 1 | b•√3 | 1.5/√3 | 40.9° | 36.9° |
| 3 | 1 | 2b | 1.5/√3 | 36.9° | 28.5° |
| 4 | 2 | 10b | 2b | 21.8° | 38.5° |
| 4 | 2 | 6b | 2b | 33.7° | 53.1° |

Die FIG 7 zeigt die Einführung der Wandler 14, 15 (FIG 1) in das Messrohr 1 am Beispiel des ersten Wandlers 14. Das Messrohr 1 weist für jeden Wandler 14, 15 einen kreisringförmigen Anschlussflansch 40 auf, der eine kreisförmige Öffnung 41 in der Wand des Messrohrs 1 umgibt. Vorzugsweise sind Dichtflächen der beiden Anschlussflansche 40 in einer Ebene parallel zur Azimutebene B-B' (FIG 6) angeordnet. Die Öffnung 41 dient für die Einführung des Wandlers 14 bzw. 15 (FIG 1) in das Medium 19 (FIG 1).

Ein Übergangsflansch 42 des Übergangsstücks 16 bzw. 17 (FIG 1) besitzt beispielsweise dieselbe Aussenabmessungen wie der Anschlussflansch 40. Der Übergangsflansch 42 ist mit seiner Dichtfläche auf die Dichtfläche des Anschlussflanschs 40 so aufgesetzt, dass die Öffnung im Messrohr 1 gegen einen Verlust des Mediums 19 abgedichtet ist. Der Anschlussflansch 40, die Öffnung 41 und der Übergangsflansch 42 sind aufeinander konzentrisch zur Azimutachse 37 bzw. 38 (FIG 6) ausgerichtet. Die Sendeachse 20 bzw. 21 (FIG 1) des Wandlers 14 bzw. 15 schliesst mit der Azimutachse 37 bzw. 38 den Winkel (90°- ε) ein. Die beiden Achsen 20 und 37 bzw. 21 und 38 schneiden sich im Anfangspunkt 23 bzw. im Endpunkt 24 (FIG 6).

Am Anfangspunkt 23 mündet die Sendeachse 20 in das erste Teilstück 26 des Wegs 22 ein. Im Endpunkt 24 geht das vierte Teilstück 29 (FIG 6) in die zweite Sendeachse 21 über. Der Durchflussmesser zeichnet sich dadurch aus, dass die Sendeachsen 20, 21 der Ultraschallwandler 14, 15 nicht in einer gemeinsamen Ebene angeordnet sind und die Innenwand 5 bis auf Öffnungen 41 für den die Ultraschallwellen sendenden bzw. empfangenden Gehäuseteil 45 völlig glatt ist.

In einer Ausführung ist der Wandler 14 bzw. 15 mit seiner Sendeachse 20 bzw. 21 um die Azimutachse 37 bzw. 38 drehbar, so dass der Azimutwinkel Ψ eingestellt und die Sendeachse 20 bzw. 21 unter einem beliebigen Azimutwinkel Ψ fixiert werden kann. In einer weiteren Ausführung ist der Azimutwinkel Ψ mit Hilfe von in den Anschlussflansch 40 und den Übergangsflansch 42 formschlüssig eingreifende Führungsbolzen 43 fixiert. Die Führungsbolzen 43 ermöglichen ein reproduzierbares Aufsetzen der Kombination aus dem Wandler 14 bzw. 15 und dem Übergangsstück 16 bzw. 17 auf das Messrohr 1.

Die Wandler 14, 15 weisen ein Gehäuseteil 45 mit einem für Ultraschall transparenten Fenster 44 auf. Das Gehäuseteil 45 taucht mit dem Fenster 44 voran in das die Öffnung 41 erfüllende Medium 19 soweit ein, dass das strömende Medium 19 durch den Gehäuseteil 45 nicht behindert ist. Die Ultraschallwellen werden ohne weitere Hilfsmittel vom sendenden Wandler 14 bzw. 15 in einem leicht divergierenden Strahl ins Medium 19 abgestrahlt. Eine Linse für Ultraschall vor dem Fenster 44 zum Kompensieren dieser Divergenz ist von Vorteil, da in dieser Ausführung das Nutzsignal beim empfangenden Wandler 15 bzw. 14 grösser ist.

Die FIG 8 zeigt eine Fresnel - Linse 46 für Ultraschall auf der dem Medium 19 (FIG 1) zugewandten Seite des Fensters 44. Sie besteht aus zu der Sendeachse 20 bzw. 21 konzentrischen Kreisringen 47 aus einem Material, das eine im Vergleich zur Schallgeschwindigkeit des Mediums 19 hohe Schallgeschwindigkeit, wie Stahl, Messing, Kupfer, Aluminium usw., aufweist. Die Breite der Kreisringe 47 und des vom Medium 19 erfüllte Zwischenraum zwischen den Kreisringen 47 ist klein gegenüber der Wellenlänge des Ultraschalls im Medium 19, z.B. Werte im Bereich 0.05 bis 0.5 der Wellenlänge. Die unterschiedlichen Schallgeschwindigkeiten im Material der Kreisringe 47 und im Medium 19 bewirkt eine Brechung der Ultraschallwellen zur Sendeachse 20 bzw. 21 hin. Die Dicke der Kreisringe 47 über der Fläche des Fensters 44 bestimmt die Brennweite der Linse 46.

Anstelle von gezogenen Metallprofilen aus rostfreiem Stahl, Stahl, Kupfer, Messing, Aluminium usw. kann das Messrohr 1 auch aus diesen Materialien gegossen oder gepresst sein. Als weitere Materialien kommen Rotguss oder Kunststoffe, insbesondere glasfaserverstärkte Typen, wie ABS, PPS, PBT usw., zur Anwendung.

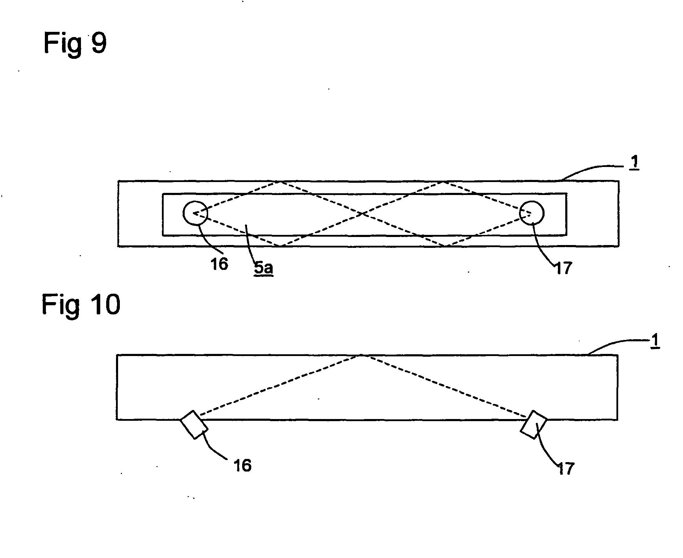

In den FIG 9 und 10 sind nochmals einige Grundgedanken der neuen Idee im Prinzip dargestellt. Die Wandler 16,17 sind dabei schräg auf der am Messrohr 1 befestigten Platte 5a angeordnet und derart ausgerichtet, dass das Messrohr 1 schraubenförmig durchschallt ist. Dadurch ist ein einfacher Aufbau, eine einfache Austauschbarkeit und Wartungsmöglichkeit gegeben.

**Patentansprüche**

1. Durchflussmesser mit einem von einem gasförmigen oder flüssigen Medium (19) durchströmten geraden Messrohr (1), mit einem in das Medium (19) eintauchenden, Ultraschallwellen sendenden sowie einem aus dem Medium (19) Ultraschallwellen empfangenden Ultraschallwandler (14; 15), wobei sich die Ultraschallwellen entlang einer Sendeachse (20 bzw. 21) der Ultraschallwandler (14; 15) ausbreiten, wobei die Sendeachsen (20; 21) der Ultraschallwandler (14; 15) nicht in einer gemeinsamen Ebene angeordnet sind und wobei ein Weg (22) der Ultraschallwellen von dem einen Ultraschallwandler (14 bzw. 15) zum andern Ultraschallwandler (15 bzw. 14) wenigstens zwei Reflexionsstellen an einer Innenwand (5) des Messrohrs (1) aufweist, **dadurch gekennzeichnet, dass** jeder Ultraschallwandler (14; 15) mittels eines Wandlerflansches (18) mit einem Adapter (16; 17) lösbar verbunden ist, dass jeder Adapter (16; 17) mit einem Übergangsflansch (42) mit einem Anschlussflansch (40) des Messrohrs (1) lösbar verbunden ist und dass ein Gehäuseteil (45) der Ultraschallwandler (14; 15) mit einem Ultraschall durchlässigen Fenster (44) durch die Adapter (16; 17) hindurch ins Medium (19) eintaucht, wobei eine Azimutachse (37; 38) durch das Kreisringzentrum des Anschlussflanschs (40) die Messrohrachse (4) unter einem Winkel von 90° schneidet und wobei die Sendeachsen (20, 21) nicht in einer Längsschnittebene (C-C') des Messrohrs (1) liegen.

2. Durchflussmesser nach Anspruch 1, **dadurch gekennzeichnet, dass** der Weg (22) aus Teilstrecken (26; 27; 28; 29) besteht und in einem spiralförmigen Polygonzug um die Messrohrachse (4) gewunden ist und dass $z = s \cdot n - 1$ die Anzahl der Reflexionen der Ultraschallwellen an der Innenwand (5) ist, wobei s und n ganze Zahlen sind und $s > 1$ die Anzahl der Teilstrecken (26; 27; 28; 29) ist, die eine Umdrehung des spiralförmigen Polygonzugs formen, und $n > 0$ die Anzahl Umdrehungen des spiralförmigen Polygonzugs um die Messrohrachse (4) auf dem Weg (22) bezeichnet.

3. Durchflussmesser nach Anspruch 1 oder 2,

**dadurch gekennzeichnet, dass** die beiden Azimutachsen (37; 38) in einer mit der Messrohrachse (4) gemeinsamen Längsschnittebene (C-C') liegen.

4. Durchflussmesser nach einem der Ansprüche 1 bis 3,
**dadurch gekennzeichnet, dass** der ultraschallwandler (14; 15) und der Adapter (16; 17) um die Azimutachse (37; 38) drehbar ist und in einer vorbestimmten Stellung auf dem Anschlussflansch (40) des Messrohr (1) feststellbar ist.

5. Durchflussmesser nach einem der Ansprüche 1 bis 4,
**dadurch gekennzeichnet, dass** der Übergangsflansch (42) und der Anschlussflansch (40) mittels formschlüssiger Führungsbolzen (43) die Ultraschallwandler (14; 15) vorbestimmt auf dem Messrohr (1) ausrichten.

6. Durchflussmesser nach einem der Ansprüche 1 bis 5,
**dadurch gekennzeichnet, dass** auf der dem Medium (19) zugewandten Seite eines Ultraschall transparenten Fensters (44) des Ultraschallwandlers (14; 15) eine fokussierende Linse (46) angeordnet ist.

7. Durchflussmesser nach Anspruch 6,
**dadurch gekennzeichnet, dass** die Linse (46) eine Fresnellinse für Ultraschall ist und dass die Linse (46) zur Sendeachse (20 bzw. 21) konzentrische Kreisringe (47) aus Stahl, Messing, Kupfer, Aluminium usw. und mit dem Medium (19) erfüllte, zur Sendeachse (20 bzw. 21) konzentrische Zwischenräumen (48) aufweist.

8. Durchflussmesser nach einem der Ansprüche 1 bis 7, **dadurch gekennzeichnet, dass** die Ultraschallwandler (14,15) mit jeweiligen Adaptern (16,17) auf einer gemeinsamen Platte (5a) angeordnet sind, welche einen Wandbereich des Messrohres (1) bildet und an diesem demontierbar befestigt ist.

**Claims**

1. Flow meter with a straight measuring tube (1), through which a gaseous or liquid medium (19) flows, with an ultrasonic converter (14; 15) submersed into the medium (19) and transmitting ultrasonic waves and receiving ultrasonic waves from the medium (19) as well, whereby the ultrasonic waves propagate along a transmitter axis (20 and 21, respectively) of the ultrasonic converters (14; 15), whereby the transmitter axes (20; 21) of the ultrasonic converters (14; 15) are not arranged on one common plane, and whereby one path (22) of the ultrasonic waves, from the one ultrasonic converter (14 or 15) to the other ultrasonic converter (14 and 15, respectively), has at least two reflection points on the inner wall (5) of the measuring tube (1),
**characterized in that** each ultrasonic converter (14; 15) is detachably connected to an adapter (16; 17) by means of a converter flange (18); **in that** each adapter (16; 17) is detachably connected to a connecting flange (40) of the measuring tube (1) by means of a transition flange (42); and **in that** a housing section (45) of the ultrasonic converter (14; 15) is immersed into the medium (19) through the adapters (16; 17) by means of a window (44), which allows for ultrasonic waves to pass through, whereby an azimuth axis (37; 38) via the annulus center of the connecting flange (40) intersects the measuring tube axis (4) at an angle of 90°, and whereby the transmitter axes (20; 21) are not on the longitudinal sectional plane (C-C') of the measuring tube (1).

2. Flow meter according to claim 1,
**characterized in that** the path (22) consists of sections (26; 27; 28; 29) and is coiled around the measuring tube axis (4) in form of a helical polyline; and **in that** $z = s \cdot n - 1$ is the number of reflections of the ultrasonic waves on the inner wail (5), whereby s and n are integer numbers, and s > 1 is the number of sections (26; 27; 28; 29) forming one rotation of the helical polyline, and n > 0 denotes the number of rotations of the helical polyline around the measuring tube axis (4) on the path (22).

3. Flow meter according to claim 1 or 2,
**characterized in that** the two azimuth axes (37; 38) are on a common longitudinal sectional plane (C-C') with the measuring tube axis (4).

4. Flow meter according to one of claims 1 to 3,
**characterized in that** the ultrasonic converter (14; 15) and the adapter (16; 17) can be pivoted around the azimuth axis (37; 38) and can be locked on a predetermined position on the connecting flange (40) of the measuring tube (1).

5. Flow meter according to one of claims 1 to 4,

**characterized in that** the transition flange (42) and the connecting flange (40) align the ultrasonic converter (14; 15) as predetermined on the measuring tube (1) by means of a form-locked guide bolt (43).

6. Flow meter according to one of claims 1 to 5,
**characterized in that** a focusing lens (46) is positioned on the medium (19) side of an ultrasound transparent window (44) of the ultrasonic converter (14; 15).

7. Flow meter according to claim 6,
**characterized in that** the lens (46) is a Fresnel lens for ultrasound and **in that** the lens (46) exhibits annuli (47) made of steel, brass, copper, aluminum etc., which are concentric towards the transmitter axis (20 and 21,. respectively), and exhibits interstitial spaces (48) filled with the medium (19), which are concentric towards the transmitter axis (20 and 21, respectively).

8. Flow meter according to one of claims 1 to 7,
**characterized in that** the ultrasonic converters (14, 15) are arranged together with the respective adapters (16, 17) on a common plate (5a), which forms a wall section of the measuring tube (1) and is mounted thereon in a demountable way.


**Revendications**

1. Débitmètre avec un tube de mesure droit (1) traversé par un fluide gazeux ou liquide (19), avec un transducteur d'ultrasons plongeant dans le fluide (19), émettant des ondes ultrasonores (14, 15) ainsi qu'un transducteur d'ultrasons (14, 15) recevant des ondes ultrasonores du fluide (19), les ondes ultrasonores se diffusant le long d'un axe d'émission (20 et/ou 21) des transducteurs d'ultrasons (14, 15), les axes d'émission (20, 21) des transducteurs d'ultrasons (14,1 5) n'étant pas disposés sur un plan commun et un trajet (22) des ondes ultrasonores de l'un des transducteurs d'ultrasons (14 et/ou 15) à l'autre transducteur d'ultrasons (15 et/ou 14) présentant au moins deux points de réflexion sur une paroi intérieure (5) du tube de mesure (1),
**caractérisé en ce que** chaque transducteur d'ultrasons (14, 15) est relié de manière amovible à un adaptateur (16, 17) au moyen d'une bride de transducteur (18), **en ce que** chaque adaptateur (16, 17) est relié de manière amovible à une bride de raccordement (40) du tube de mesure (1) avec une bride de transition (42) et **en ce qu'**une partie du boîtier (45) du transducteur d'ultrasons (14, 15) avec une fenêtre perméable aux ultrasons (44) plonge dans le fluide (19) à travers l'adaptateur (16, 17), un axe azimutal (37, 38) coupant l'axe du tube de mesure (4) avec un angle de 90° à travers le centre d'anneau de cercle de la bride de raccordement (40) et les axes d'émission (20, 21) ne se situant pas dans un plan de coupe longitudinale (C-C') du tube de mesure (1).

2. Débitmètre selon la revendication 1,
**caractérisé en ce que** le trajet (22) est composé de sections de trajets (26, 27, 28, 29) et fait le tour de l'axe du tube de mesure (4) avec un tracé polygonal spiralé et **en ce que** z = s.n-1 est le nombre des réflexions des ondes ultrasonores sur la paroi intérieure (5), s et n étant des nombres entiers et s > 1 étant le nombre de sections de trajets (26, 27, 28, 29) qui forment une rotation du tracé polygonal spiralé et n> 0 désignant le nombre de rotations du tracé polygonal spiralé autour de l'axe du tube de mesure (4) sur le trajet (22).

3. Débitmètre selon la revendication 1 ou 2,
**caractérisé en ce que** les deux axes azimutaux (37, 36) se trouvent dans le même plan de coupe longitudinale (C-C') que l'axe du tube de mesure (4).

4. Débitmètre selon l'une quelconque des revendications 1 à 3,
**caractérisé en ce que** le transducteur d'ultrasons (14, 15) et l'adaptateur (16, 17) peuvent tourner autour de l'axe azimutal (37, 38) et être fixés dans une position prédéfinie sur la bride de raccordement (40) du tube de mesure (1).

5. Débitmètre selon l'une quelconque des revendications 1 à 4,
**caractérisé en ce que** la bride de transition (42) et la bride de raccordement (40) alignent les transducteurs d'ultrasons (14, 15) de manière prédéfinie sur le tube de mesure (1) au moyen de boulons de guidage (43) par forme.

6. Débitmètre selon l'une quelconque des revendications 1 à 5,
**caractérisé en ce qu'**une lentille (46) de mise au point est disposée sur la face dirigée vers le fluide (19) d'une fenêtre perméable aux ultrasons (44) du transducteur d'ultrasons (14, 15).

**7.** Débitmètre selon la revendication 6,
**caractérisé en ce que** la lentille (46) est une lentille de Fresnel pour ultrasons et **en ce que** la lentille (46) comporte des anneaux de cercle (47) en acier, en étain, en cuivre, en aluminium etc. concentriques par rapport à l'axe d'émission (20 et/ou 21) et des interstices (48) concentriques par rapport à l'axe d'émission (20 et/ou 21) remplis du fluide (19).

**8.** Débitmètre selon l'une quelconque des revendications 1 à 7, **caractérisé en ce que** les transducteurs d'ultrasons (14, 15) sont disposés avec des adaptateurs respectifs (16, 17) sur une plaque commune (5a) qui forme une zone de paroi du tube de mesure (1) et est fixée sur ce dernier de manière à pouvoir être démontée.

## Fig. 1

## Fig. 2

## Fig. 3

EP 1 337 810 B1

Fig. 4

Fig. 7

Fig. 5

Fig. 6

Fig. 8

12

Fig 9

Fig 10